Europäisches Patentamt

European Patent Office

Office européen des brevets

(11) Publication number: **0 324 853 B1**

# EUROPEAN PATENT SPECIFICATION

(45) Date of publication of patent specification: **06.05.92**   (51) Int. Cl.⁵: **G11B 5/64**, G11B 11/10, H01F 10/30

(21) Application number: **87903436.1**

(22) Date of filing: **29.05.87**

(86) International application number:
**PCT/JP87/00347**

(87) International publication number:
**WO 87/07422 (03.12.87 87/27)**

(54) **MAGNETO-OPTICAL DISK.**

(30) Priority: **30.05.86 JP 123677/86**
**23.12.86 JP 305240/86**
**08.01.87 JP 1068/87**
**13.01.87 JP 4143/87**
**20.01.87 JP 8951/87**
**27.01.87 JP 16382/87**

(43) Date of publication of application:
**26.07.89 Bulletin 89/30**

(45) Publication of the grant of the patent:
**06.05.92 Bulletin 92/19**

(84) Designated Contracting States:
**DE FR GB**

(56) References cited:
**EP-A- 0 157 664**
**FR-A- 2 547 445**
**GB-A- 2 136 647**

**Patent Abstracts of Japan, vol. 8, no. 45
(P.257) (1482) 28 February 1984, see abstract
& JP, A, 58196641**

(73) Proprietor: **SUMITOMO METAL MINING COM-
PANY LIMITED
11-3, Shinbashi 5-chome Minato-ku
Tokyo 105(JP)**

(72) Inventor: **YONEYAMA, Yukinobu Sumitomo
Metal Mining Co., Ltd.
Chuokenkyusho 18-5, Nakakokubun 3-chome
Ichikawa-shi Chiba 272(JP)**
Inventor: **NATE, Tatsuo Sumitomo Metal Min-
ing Co., Ltd.
Chuokenkyusho 18-5, Nakakokubun 3-chome
Ichikawa-shi Chiba 272(JP)**
Inventor: **YOROZU, Takehiko Sumitomo Metal
Mining Co., Ltd.
Chuokenkyusho 18-5, Nakakokubun 3-chome
Ichikawa-shi Chiba 272(JP)**
Inventor: **KAWAMOTO, Atsushi Sumitomo
Metal Mining Co., Ltd.
Chuokenkyusho 18-5, Nakakokubun 3-chome
Ichikawa-shi Chiba 272(JP)**

Patent Abstracts of Japan, vol. 9, no. 292 (P-406) (2015) 19 November 1985 see abstract & JP, A, 60129951

Inventor: **ITO, Mikihiko Sumitomo Metal Mining Co., Ltd.**
**Chuokenkyusho 18-5, Nakakokubun 3-chome**
**Ichikawa-shi Chiba 272(JP)**

74 Representative: **Cookson, Barbara Elizabeth et al**
**WITHERS & ROGERS 4 Dyer's Buildings Holborn**
**London EC1N 2JT(GB)**

## Description

This invention relates to a magneto-optical disk and more particularly to a novel magneto-optical disk possessing a dielectric film.

A magneto-optical disk which records information in a layer of a magneto-optical recording medium and reproduces or erases the recorded information by the projection of a beam of light on the layer is expected to find extensive utility in various applications because it is capable of recording replaceable information in high density.

In the layered structures hitherto proposed for magneto-optical disks of this class, the structure which has superposed on a transparent substrate formed of glass or such a transparent macromelecular substance as polycarbonate, acrylate, epoxy, or polymethyl pentene, as the first layer, a dielectric film such as of $SiO_2$, SiO, or $CeO_2$ serving the purpose of protecting a layer of magneto-optical recording medium of the Tb-Fe type, Tb-Fe-Co type, or Gd-Tb-Fe type having a thickness exceeding $3 \times 10^{-8}$ m (300Å) and, at the same time, allowing the portion of the light for reading information which is reflected within the aforementioned layer of magneto-optical recording medium to undergo multiple reflection (interference) therein thereby increasing the apparent Kerr's angle of rotation of the reflected light for reading and enhancing the reproduction C/N ratio (enhancement effect), as the second layer, the aforementioned layer of magneto-optical recording medium and, as the third layer, a dielectric film such as of $SiO_2$, or SiO, or $CeO_2$ or a film of such a metal as Al, Bi, or Pb for the protection of the aforementioned layer of magneto-optical recording medium (the specification of Japanese Patent Application Disclosure SHO 59(1984)-110,056 and the specification of Japanese Patent Application Disclosure SHO 59(1984)-121,368) and the structure which has superposed on the same transparent substrate as mentioned above, as the first layer, a dielectric film for the protection of a layer of magneto-optical recording medium having a thickness of not more than $3 \times 10^{-8}$ m (300Å), as the second layer, the aforementioned layer of magneto-optical recording medium, as the third layer, a dielectric film serving the purpose of protecting the aforementioned layer of magneto-optical recording medium and, at the same time, allowing the light for reading information which passes through the film to undergo multiple reflection (interference) between the film and a metal film thereby increasing the apparent Faraday's angle of rotation of the reflected light for reading and enhancing the reproduction C/N ratio (enhancement effect) and, as the fourth layer, the aforementioned metal film (the specification of Japanese Patent Application Disclosure SHO 60(1985)-129,951 and the specification of Japanese Patent Application Disclosure SHO 60(1985)-209,947, for example, have found recognition as the most promising versions from the viewpoint of practicability of magneto-optical disks.

In the magneto-optical disks of the foregoing structures, however, the prevention of dropout of the recorded information and the enhancement of the reproduction C/N ratio have not been fully attained.

An object of this invention is to provide a magneto-optical disk which solves these problems, excels in both long durability and magneto-optical recording and reproducing properties, and completely deserves practical adoption.

According to the invention there is provided a magneto-optical disk having superposed on a transparent substrate three films, i.e a film of magneto-optical recording medium, an interference film formed on one side of said film, and a protective film formed on the other side of said film, characterised by the fact that said interference film has a thickness of 2 to $12 \times 10^{-8}$ m (200 to 1200Å) and is formed of a dielectric material of the composition of $AO_x$, $LiAO_y$, or $BiD_zO_u$ (wherein A stands for at least one member selected from the group consisting of Ta and Nb, D for at least one member selected from the group consisting of Ge, Si, Ti, Pb, Zn, Al, and B, and x, y, z, and u stand for numerical values respectively satisfying the formulas $1.5 \leq x < 2.5$, $1.5 \leq y < 3$, $11 \leq z \leq 13$, and $16 \leq u \leq 23$) and that the thickness of the protective layer is not less than $2 \times 10^{-8}$ m (200Å).

The present invention requires the composition of the aforementioned interference film to be represented by $AO_x$,$LiAO_y$, or $Bi_zDO_u$ (wherein A stands for at least one element selected from the group consisting of Ta and Nb, D stands for at least one element selected from the group consisting of Ge, Si, Ti, Pb, Zn, Al and B, x, y, z, and u stand for numerical values respectively satisfying $1.5 \leq x < 2.5$, $1.5 \leq y < 3$, $11 \leq z \leq 13$, and $16 \leq u \leq 23$). This is because these components are so stable in wide ranges of the variables x, y, and u that each of the compositions is capable of absorbing the oxygen impinging thereon from the ambience and manifesting the effect thereof in preventing the layer of magneto-optical recording medium from oxidation to a great extent as compared with the conventional dielectric film. This interference film possesses the optimum index of refraction for efficient use of the enhancement effect which ensures retention of the reflectance necessary for reading (intensity of information) and improve the reproduction C/N (contrast of information) and, therefore, manifests a marked effect of an interference film as compared with the conventional dielectric film.

The conditions imposed on the variables x, y, and u are essential for the following reason. If the variables are less than the lower limits, a metal is formed within the dielectric film and this metal prevents formation of a homogenous transparent film. If they exceed the upper limits, there ensures presence of excess oxygen or nitrogen and the excess oxygen or nitrogen enters the layer of magneto-optical recording medium and degrades the properties thereof. The conditions imposed on the variable z are essential similarly.

The position at which the dielectric film is disposed hinges on the thickness of the magneto-optical recording medium; the dielectric film is formed in an inner layer relative to the medium when the thickness exceeds $3 \times 10^{-8}$ m (300Å) and in an outer layer relative thereto when the thickness is not more than $3 \times 10^{-8}$ m (300Å). The thickness of the dielectric film is desired to fall in the range of 2 to $12 \times 10^{-8}$ m (200 to 1200Å). If this thickness is less than $2 \times 10^{-8}$ m (200Å), the heterogeneity of the film due to occurrence of pinholes is aggravated and the layer of the magneto-optical recording medium is oxidized to the extent of inducing the phenomenon of dropout of information. Thus, the effect of the dielectric film in protecting the layer of the recording medium is not sufficient. If the thickness exceeds $12 \times 10^{-8}$ m (1200Å), the dispersion of the thickness of the film increases so much as to mar the efficient use of the enhancement effect.

As the composition of the protective film other than the interference film, when this protective film is formed (1) as the first layer on the transparent substrate, any of the compositions such as $SiO_2$, $SiO$, and $CeO_2$ conventionally used for the dielectric film, any of the compositions heretofore proposed by the present applicant such as $E_aF_{1-a}O_v$ (wherein E stands for Zr or Cr, F for Hf or Zn, a for a numerical value satisfying the formula $O \leq a \leq 1$, and v for a numerical value satisfying the formula $v > 0.5$; Japanese Patent Application disclosure SHO 62(1987)-33, 350), $G_bZr_{1-b}O_w$ (wherein G stands for Y or Al, b for a numerical value satisfying the formula $O < b < 1$, and w for a numerical value satisfying the formula $0.6 = w = 1.9$; Japanese Patent Application Disclosure SHO 62(1987)-43,851) $JO_5$ (wherein J stands for Gd, Tb, Dy, Ho, Yb, or Y and s for a numerical value satisfying the formula $0.6 \leq s \leq 1.3$; Japanese Patent Application Disclosure SHO 62(1987)-47,847), and $L_cM_{1-c}N_t$ (wherein L stands for Ar, B or Cr, M for Hf, Al or Ti, c for a numerical value satisfying the formula $O \leq c \leq 1$, and t for a numerical value satisfying the formula $0.4 \leq t \leq 0.9$; Japanese Patent Application Disclosure SHO 60(1985)-208,452), or any of the compositions used herein for the interference film such as $A'O_{x'}$, $LiA'O_{y'}$, and $Bi_{z'}D'O_{u'}$ (wherein A' stands for at least one element selected from the group consisting of Ta and Nb, D' for at least one element selected from the group consisting of Ge, Si, Ti, Pb, Zn, Al, and B, x' for a numerical value satisfying the formula $1.5 \leq x' < 2.5$, y' for a numerical value satisfying the formula $1.5 \leq y' < 3$, z' for a numerical value satisfying the formula $11 \leq z' \leq 13$, and u' for numerical value satisfying the formula $16 \leq u \leq 23$) can be used. When the protective film is formed (2) as the third layer, any of the compositions enumerated above in the case of (1) or any of such metallic elements as Al, Bi, and Pb conventionally used for the metal film can be used.

This protective film is desired to be formed in a thickness of not less than $2 \times 10^{-8}$ m (200Å). If the thickness of this film is less than $2 \times 10^{-8}$ m (200Å), the heterogeneity of the film as due to occurrence of pinholes is aggravated possibly to the extent of preventing the protective film from providing effective protection for the film of magneto-optical recording medium.

When the protective film is formed as the third layer, a film of such metallic element as Al, Bi or Pb may be formed as the fourth layer.

The component films of the magneto-optical disk according to this invention may be formed by high-frequency sputtering, Dc sputtering, vacuum evaporation, etc. for example.

(Example)

Now, working examples of the present invention will be cited below in conjunction with comparative experiments and an example of prior art. On grooved transparent substrate of polycarbonate 1.2 mm in thickness, a first layer was formed, then a second layer of a film of magneto-optical recording medium of the composition of $Tb_{0.27}Fe_{0.65}\text{-}Co_{0.08}$ (Run Nos. 1 - 91) or of $Tb_{0.27}Fe_{0.60}Co_{0.13}$ (Run Nos. 92 - 137) was superposed in a thickness of $7.5 \times 10^{-8}$ m (750Å), and a third layer was further superposed, invariably by the high-frequency sputtering technique. In the case of use of Run No. 92 - 137 wherein the second layer of the above mentioned composition was formed, an aluminium film of $1 \times 10^{-7}$ m (1000Å) was further superposed as a fourth layer. The components, compositions, and thickness of the first and third layer produced in the varying test runs are shown in the following table.

On a varying magneto-optical disk produced consequently, information was recorded using a recording frequency of 2 MHz and a laser power of 4 mW. Then, the recorded information was reproduced using a reproducing laser power 1 mW. In the following table, the initial reproduction C/N of a given magneto-optical

4

disk is reported in the relative value A based on the value obtained with the specific sample using a first layer made of SiO (Run No. 1, as example of prior art) and the reproduction C/N of the magneto-optical disk determined after 1,000 hours' exposure of the magneto-optical disk to an atmosphere at 60°C and 90% of relative humidity is reported in the relative value B based on the aforementioned initial reproduction C/N of the disk.

| Run No. | Type of process | First layer Component | Composition | Thickness ($10^{-8}$ m) | Third layer Component | Composition | Thickness ($10^{-8}$ m) | Reproduction C/N ratio A | B |
|---|---|---|---|---|---|---|---|---|---|
| 1 | Prior art | SiO | - | 8 | $SiO_2$ | - | 20 | 1.0 | 0.75 |
| 2 | Ex.* | $TaO_x$ | $x=2.3$ | 8 | $TaO_x$, | $x'=2.3$ | = | 1.32 | 0.98 |
| 3 | = | = | $x=1.6$ | 7.8 | = | = | = | 1.37 | 0.96 |
| 4 | C.E** | = | $x=1.4$ | 8 | = | = | = | 1.07 | 0.79 |
| 5 | = | = | $x=2.7$ | = | = | = | = | 1.0 | 0.77 |
| 6 | = | = | $x=2.3$ | 1 | = | = | = | 1.1 | 0.7 |
| 7 | = | = | = | 12 | = | = | = | 1.05 | 0.97 |
| 8 | = | = | = | 8 | = | = | 1.5 | 1.32 | 0.75 |
| 9 | = | = | = | = | = | $x'=1.4$ | 20 | 1.3 | 0.80 |
| 10 | = | = | = | = | Al | $x'=2.7$ | = | 1.25 | 0.80 |
| 11 | Ex.* | = | = | = | = | - | = | 1.27 | 0.98 |
| 12 | C.E** | $SiO_2$ | - | = | $TaO_x$, | $x'=2.3$ | = | 0.9 | 0.83 |
| 13 | Ex.* | $NbO_x$ | $x=2.3$ | = | $NbO_x$, | $x'=2.3$ | = | 1.3 | 0.98 |
| 14 | = | = | $x=1.6$ | 7.8 | = | = | = | 1.37 | 0.98 |

| Run No. | Type of process | First layer | | | Third layer | | | Reproduction C/N ratio | |
|---|---|---|---|---|---|---|---|---|---|
| | | Component | Composition | Thickness ($10^{-8}$ m) | Component | Composition | Thickness ($10^{-8}$ m) | A | B |
| 15 | C.E** | " | x =1.4 | 8 | " | " | " | 1.12 | 0.82 |
| 16 | C.E** | $NbO_x$ | x =2.7 | 8 | $NbO_{x'}$ | x'=2.3 | 20 | 1.0 | 0.77 |
| 17 | " | " | x =2.3 | 1 | " | " | " | 1.1 | 0.68 |
| 18 | " | " | " | 12 | " | " | " | 1.07 | 1.0 |
| 19 | " | " | " | 8 | " | " | 1.5 | 1.3 | 0.77 |
| 20 | " | " | " | " | " | x'=1.4 | 20 | 1.3 | 0.86 |
| 21 | " | " | " | " | " | x'=2.7 | " | 1.27 | 0.78 |
| 22 | Ex.* | $NbO_x$ | x =2.3 | 8 | Al | – | 20 | 1.27 | 0.98 |
| 23 | C.E** | $SiO_2$ | – | " | $NbO_{x'}$ | x'=2.3 | " | 1.0 | 0.85 |
| 24 | Ex.* | $Ta_{0.5}Nb_{0.5}O_x$ | x=2.3 | " | $Ta_{0.5}Nb_{0.5}O_{x'}$ | x'=2.3 | " | 1.37 | 0.98 |
| 25 | " | " | x =1.6 | 8.3 | " | " | " | 1.35 | 0.98 |
| 26 | C.E** | " | x =1.2 | 8 | " | " | " | 1.1 | 0.77 |

6

| Run No. | Type of process | First layer | | | Third layer | | | Reproduction C/N ratio | |
|---|---|---|---|---|---|---|---|---|---|
| | | Component | Composition | Thickness $(10^{-8}\text{m})$ | Component | Composition | Thickness $(10^{-8}\text{m})$ | A | B |
| 27 | " | " | $x = 2.7$ | " | " | " | " | 1.0 | 0.70 |
| 28 | " | " | $x = 2.3$ | 1 | " | " | " | 1.07 | 0.72 |
| 29 | " | " | " | 11 | " | " | " | 1.07 | 0.98 |
| 30 | " | " | " | 8 | " | " | 1.5 | 1.32 | 0.84 |
| 31 | " | $Ta_{0.5}{}'Nb_{0.5}O_x$ | " | 8 | $Ta_{0.5}{}'Nb_{0.5}O_x{}'$ | $x' = 1.4$ | 20 | 1.32 | 0.86 |
| 32 | " | " | " | " | " | $x' = 2.7$ | " | 1.27 | 0.78 |
| 33 | Ex.* | " | " | " | A1 | – | " | 1.27 | 0.98 |
| 34 | C.E** | $SiO_2$ | – | " | $Ta_{0.5}{}'Nb_{0.5}O_x{}'$ | $x' = 2.3$ | " | 0.97 | 0.89 |
| 35 | Ex.* | $Bi_zGeO_u$ | $z = 12$ $u = 20$ | " | $SiO_2$ | – | " | 1.30 | 0.98 |
| 36 | C.E** | " | " | 1 | " | – | " | 0.70 | 0.96 |

EP 0 324 853 B1

| Run No. | Type of process | First layer | | | Third layer | | | Reproduction C/N ratio | |
|---|---|---|---|---|---|---|---|---|---|
| | | Component | Composition | Thickness ($10^{-8}$m) | Component | Composition | Thickness ($10^{-8}$m) | A | B |
| 37 | Ex.* | " | z = 13 u = 18 | 8 | " | – | " | 1.30 | 0.98 |
| 38 | C.E** | " | " | 14 | " | – | " | 1.0 | 0.98 |
| 39 | " | " | z = 12 u = 15 | 8 | " | – | " | 0.95 | 0.97 |
| 40 | C.E** | $Bi_zGeO_u$ | z = 15 u = 20 | 8 | $SiO_2$ | – | 20 | 0.95 | 0.98 |
| 41 | " | " | z = 9 u = 20 | " | " | – | " | 0.90 | 0.90 |
| 42 | Ex.* | $Bi_zPbO_u$ | z = 12 u = 20 | " | " | – | 15 | 1.25 | 0.98 |
| 43 | C.E** | " | " | 1 | " | – | " | 0.65 | 0.90 |
| 44 | Ex.* | " | z = 12 u = 22 | 8 | " | – | " | 1.25 | 0.98 |
| 45 | C.E** | " | " | 14 | " | – | " | 0.95 | 0.95 |
| 46 | " | " | z = 12 u = 24 | 8 | " | – | " | 0.90 | 0.85 |

| Run No. | Type of process | First layer Component | First layer Composition | First layer Thickness ($10^{-8}$m) | Third layer Component | Third layer Composition | Third layer Thickness ($10^{-8}$m) | Reproduction C/N ratio A | B |
|---|---|---|---|---|---|---|---|---|---|
| 47 | Ex.* | $Bi_2GeO_u$ | $z = 12$, $u = 20$ | " | $Bi_2'GeO_{u'}$ | $z' = 13$, $u' = 18$ | 10 | 1.30 | 0.98 |
| 48 | C.E** | " | " | " | $Bi_2'GeO_{u'}$ | $z' = 12$, $u' = 15$ | " | 1.30 | 0.75 |
| 49 | " | " | " | " | " | $z' = 12$, $u' = 24$ | " | 1.30 | 0.75 |
| 50 | " | " | " | " | " | $z' = 12$, $u' = 20$ | 1 | 1.30 | 0.60 |
| 51 | Ex.* | $Bi_2AlO_u$ | $z = 12$, $u = 20$ | " | " | " | 10 | 1.25 | 0.98 |
| 52 | " | " | $z = 12$, $u = 16$ | " | " | " | " | 1.25 | 0.96 |
| 53 | C.E** | " | $z = 12$, $u = 24$ | " | " | " | " | 0.85 | 0.85 |
| 54 | Ex.* | $Bi_2Ge_{0.5}'Pb_{0.5}O_u$ | $z = 12$, $u = 20$ | " | $Bi_2'Ge_{0.5}'$ | " | " | 1.30 | 0.96 |
| 55 | " | $LiNbO_y$ | $Y = 2.0$ | " | $SiO_{1.8}$ | — | 20 | 1.30 | 0.98 |
| 56 | C.E** | $LiNbO_y$ | $Y = 2.0$ | 1 | $SiO_{1.8}$ | — | 20 | 0.65 | 0.96 |
| 57 | Ex.* | " | $Y = 2.5$ | 8 | " | — | " | 1.25 | 0.98 |

| Run No. | Type of process | First layer | | | Third layer | | | Reproduction C/N ratio | |
| | | Component | Compo-sition | Thick-ness $(10^{-8}m)$ | Component | Compo-sition | Thick-ness $(10^{-8}m)$ | A | B |
|---|---|---|---|---|---|---|---|---|---|
| 58 | C.E** | " | u = 2.0 | 13 | " | – | " | 0.95 | 0.98 |
| 59 | " | " | y = 1.2 | 8 | " | – | " | 0.80 | 0.98 |
| 60 | " | " | y = 3.2 | " | " | – | " | 0.65 | 0.95 |
| 61 | Ex.* | $LiTaO_y$ | y = 2.0 | " | " | – | " | 1.25 | 0.98 |
| 62 | C.E** | " | " | 1 | " | – | " | 0.70 | 0.95 |
| 63 | Ex.* | " | y = 2.4 | 8 | " | – | " | 1.25 | 0.98 |
| 64 | C.E** | " | " | 13 | " | – | " | 0.95 | 0.98 |
| 65 | " | " | y = 1.1 | 8 | " | – | " | 0.82 | 0.98 |
| 66 | " | " | y = 3.2 | " | " | – | " | 0.65 | 0.90 |
| 67 | Ex.* | $LiNbO_y$ | y = 2.0 | " | $LiNbO_{y'}$ | y'=2.0 | 15 | 1.30 | 0.98 |
| 68 | C.E** | " | " | " | " | " | 1 | 0.80 | 0.90 |
| 69 | " | " | " | " | " | y'=3.2 | 15 | 0.70 | 0.95 |
| 70 | Ex.* | $LiTaO_y$ | " | " | " | y'=2.0 | " | 1.25 | 0.98 |
| 71 | " | $LiNb_{0.2}Ta_{0.8}O_y$ | " | " | $LiNb_{0.2}Ta_{0.8}O_{y'}$ | " | " | 1.30 | 0.97 |

| Run No. | Type of process | First layer | | | Third layer | | | Reproduction C/N ratio | |
|---|---|---|---|---|---|---|---|---|---|
| | | Component | Composition | Thickness ($10^{-8}$m) | Component | Composition | Thickness ($10^{-8}$m) | A | B |
| 72 | " | $LiNb_{0.5}Ta_{0.5}O_y$ | " | " | $LiNb_{0.5}Ta_{0.5}O_{y'}$ | " | " | 1.30 | 0.98 |
| 73 | " | $TaO_x$ | $x = 1.5$ | " | $LiNbO_{y'}$ | $y' = 2.5$ | 20 | 1.30 | 0.98 |
| 74 | " | " | $x = 2.0$ | " | " | " | " | 1.30 | 0.98 |
| 75 | C.E** | " | $x = 3.0$ | " | " | " | " | 0.95 | 0.75 |
| 76 | Ex.* | $NbO_x$ | $x = 1.5$ | 8 | $LiTaO_{y'}$ | $y' = 2.5$ | 10 | 1.32 | 0.97 |
| 77 | C.E | " | $x = 1.0$ | " | " | " | " | 0.95 | 0.90 |
| 78 | Ex.* | $Ta_{0.5}Nb_{0.5}O_x$ | $x = 2.0$ | " | " | " | " | 1.30 | 0.98 |
| 79 | C.E** | " | " | 13 | " | " | " | 0.95 | 0.90 |
| 80 | Ex.* | $Bi_zGeO_u$ | $z = 12$ $u = 20$ | 8 | " | " | " | 1.30 | 0.98 |
| 81 | " | $NbO_x$ | $x = 2.0$ | " | " | " | " | 1.30 | 0.98 |
| 82 | C.E** | $Ta_{0.5}Nb_{0.5}O_x$ | " | 13 | " | " | " | 0.95 | 0.90 |
| 83 | Ex.* | $Bi_zGeO_u$ | $z = 12$ $u = 20$ | 8 | $ZrN_t$ | $t = 0.7$ | 20 | 1.30 | 0.98 |

EP 0 324 853 B1

| Run No. | Type of process | First layer | | | Third layer | | | Reproduction C/N ratio | |
|---|---|---|---|---|---|---|---|---|---|
| | | Component | Composition | Thickness ($10^{-8}$m) | Component | Composition | Thickness ($10^{-8}$m) | A | B |
| 84 | C.E** | " | $z = 12$ $u = 15$ | " | " | " | " | 0.95 | 0.97 |
| 85 | " | " | $z = 14$ $u = 20$ | " | " | " | " | 0.95 | 0.98 |
| 86 | Ex.* | $Bi_zPbO_u$ | $z = 12$ $u = 20$ | " | $HfN_t$ | " | " | 1.30 | 0.99 |
| 87 | C.E** | " | $z = 12$ $u = 24$ | " | " | " | " | 0.95 | 0.70 |
| 88 | " | $Bi_zAlO_u$ | $z = 10$ $u = 20$ | " | " | " | " | 0.95 | 0.70 |
| 89 | " | $LiNbO_y$ | $y = 1.0$ | " | $Ta_{0.5}''$ $Nb_{0.5}O_{x'}$ | $x'=2.0$ | " | 0.95 | 0.95 |
| 90 | " | " | $y = 3.5$ | " | " | " | " | 0.95 | 0.70 |
| 91 | Ex.* | $LiTaO_y$ | $y = 2.5$ | 8 | $Ta_{0.5}'$ $Nb_{0.5}O_{x'}$ | $x'=2.0$ | 20 | 1.25 | 0.95 |
| 92 | " | $SiO_2$ | – | " | $TaO_x$ | $x = 1.5$ | 8 | 1.30 | 0.98 |
| 93 | C.E** | " | – | " | " | " | 1 | 0.90 | 0.55 |
| 94 | " | " | – | " | " | " | 15 | 1.0 | 0.6 |

EP 0 324 853 B1

| Run No. | Type of process | First layer | | | Third layer | | | Reproduction C/N ratio | |
|---|---|---|---|---|---|---|---|---|---|
| | | Component | Composition | Thickness ($10^{-8}$m) | Component | Composition | Thickness ($10^{-8}$m) | A | B |
| 95 | Ex.* | " | - | " | " | $x = 2.3$ | 8 | 1.25 | 0.98 |
| 96 | C.E** | " | - | " | " | $x = 1.0$ | " | 0.8 | 0.6 |
| 97 | " | " | - | " | " | $x = 2.7$ | " | 0.7 | 0.6 |
| 98 | Ex.* | " | - | " | $NbO_x$ | $x = 1.5$ | " | 1.30 | 0.99 |
| 99 | C.E** | " | - | " | " | " | 1 | 0.88 | 0.55 |
| 100 | " | " | - | " | " | " | 15 | 1.0 | 0.6 |
| 101 | Ex.* | " | - | " | " | $x = 2.3$ | 8 | 1.25 | 0.96 |
| 102 | C.E** | " | - | " | " | $x = 1.0$ | " | 0.8 | 0.6 |
| 103 | " | " | - | " | " | $x = 2.7$ | " | 0.7 | 0.6 |
| 104 | Ex.* | $TaO_x$, | $x'=1.5$ | " | $TaO_x$ | $x = 2.3$ | " | 1.30 | 0.98 |
| 105 | " | " | $x'=2.3$ | " | " | " | " | 1.30 | 0.95 |
| 106 | C.E** | " | " | 1 | " | " | " | 1.30 | 0.55 |
| 107 | " | " | " | 15 | " | " | " | 1.0 | 0.98 |
| 108 | " | " | $x'=1.0$ | 8 | " | " | " | 0.9 | 0.6 |

| Run No. | Type of process | First layer | | | Third layer | | | Reproduction C/N ratio | |
| | | Component | Composition | Thickness $(10^{-8}\,m)$ | Component | Composition | Thickness $(10^{-8}\,m)$ | A | B |
|---|---|---|---|---|---|---|---|---|---|
| 109 | " | " | x'=2.7 | " | " | " | " | 0.8 | 0.6 |
| 110 | Ex.* | $NbO_x'$ | x'=1.5 | " | " | " | " | 1.30 | 0.99 |
| 111 | Ex.* | $NbO_x'$ | x'=2.3 | 8 | $TaO_x$ | x = 2.3 | 8 | 1.30 | 0.98 |
| 112 | " | " | " | 3 | " | " | " | 1.30 | 0.98 |
| 113 | C.E** | " | x'=2.7 | 8 | " | " | " | 1.28 | 0.60 |
| 114 | Ex.* | $Ta_{0.5}Nb_{0.5}O_x'$ | x'=2.3 | " | $Ta_{0.5}Nb_{0.5}O_x$ | " | " | 1.30 | 0.97 |
| 115 | " | " | " | " | " | " | 3 | 1.25 | 0.97 |
| 116 | C.E** | " | " | " | " | x=1.0 | 8 | 1.0 | 0.6 |
| 117 | Ex.* | SiO | — | 10 | $Bi_zGeO_u$ | z = 12 u = 20 | " | 1.30 | 0.98 |
| 118 | C.E** | " | — | " | " | " | 1 | 0.70 | 0.98 |
| 119 | Ex.* | " | — | " | " | z = 13 u = 18 | 8 | 1.30 | 0.97 |
| 120 | C.E** | " | — | " | " | " | 14 | 1.0 | 0.95 |

14

| Run No. | Type of process | First layer Component | Compo-sition | Thick-ness $(10^{-8}\text{m})$ | Third layer Component | Compo-sition | Thick-ness $(10^{-8}\text{m})$ | Reproduction C/N ratio A | B |
|---|---|---|---|---|---|---|---|---|---|
| 121 | " | " | – | " | " | z = 12 u = 15 | 8 | 0.95 | 0.98 |
| 122 | " | " | – | " | " | z = 15 u = 20 | " | 0.95 | 0.95 |
| 123 | " | " | – | " | " | z = 9 u = 20 | " | 0.90 | 0.60 |
| 124 | Ex.* | " | – | 8 | $Bi_zPbO_u$ | z = 12 u = 20 | " | 1.25 | 0.96 |
| 125 | C.E** | " | – | " | " | " | 1 | 0.65 | 0.55 |
| 126 | Ex.* | " | – | " | " | z = 12 u = 22 | 8 | 1.25 | 0.96 |
| 127 | C.E** | " | – | " | " | " | 14 | 0.95 | 0.96 |
| 128 | C.E** | SiO | – | 8 | $Bi_zPbO_u$ | z = 12 u = 24 | 8 | 0.90 | 0.55 |
| 129 | Ex.* | $Bi_{z'}GeO_u$ | z' = 12 u' = 20 | " | $Bi_zAlO_u$ | z = 12 u = 20 | " | 1.25 | 0.97 |
| 130 | " | " | " | " | " | z = 12 u = 16 | " | 1.25 | 0.97 |

| Run No. | Type of process | First layer Component | First layer Composition | First layer Thickness ($10^{-8}$m) | Third layer Component | Third layer Composition | Third layer Thickness ($10^{-8}$m) | Reproduction C/N ratio A | Reproduction C/N ratio B |
|---|---|---|---|---|---|---|---|---|---|
| 131 | C.E** | = | = | = | = | $z=12$ $u=24$ | = | 0.85 | 0.55 |
| 132 | Ex.* | = | $z'=13$ $u'=18$ | = | $Bi_2GeO_u$ | $z=12$ $u=20$ | = | 1.30 | 0.98 |
| 133 | C.E** | = | $z'=12$ $u'=15$ | = | = | = | = | 1.30 | 0.60 |
| 134 | = | = | $z'=12$ $u'=24$ | = | = | = | = | 1.30 | 0.45 |
| 135 | = | = | $z'=12$ $u'=20$ | 1 | = | = | = | 1.30 | 0.55 |
| 136 | = | = | = | 14 | = | = | = | 0.95 | 0.95 |
| 137 | Ex.* | $Bi_2Ge_{0.5}Pb_{0.5}O_{u'}$ | = | 8 | $Bi_2Ge_{0.5}Pb_{0.5}O_u$ | = | = | 1.30 | 0.98 |

(Note) Ex.* = Example      C.E** = Comparative Experiment

It is clearly noted from the foregoing table that in all the working examples of this invention, the relative values A of initial C/N exceed 1.25 and the relative values B of C/N after aging exceed 0.95. Thus, the magneto-optical disks produced in these working examples possess very high magneto-optical recording and reproducing properties and excel in long stability and that in the example of prior art and the comparative experiments, the magneto-optical disks are not excellent in both magneto-optical recording and reproducing properties and long durability.

16

This invention is not limited to the stratal compositions indicated in the working examples cited above. For example, stratal compositions having a layer of a resin capable of being set with ultraviolet light superposed additionally on the dielectric film or the metallic film serving as the third or fourth layer and stratal composition obtained by opposing two identical magneto-optical disks of the foregoing compositions across a space and filling this intervening space with an inert gas can be obtained as embodiments of the present invention.

As described above, the magneto-optical disks according to the present invention enjoy a great advantage that they posses notably high magneto-optical recording and reproducing properties and excel in long durability.

## Claims

1. A magneto-optical disk having superposed on a transparent substrate three films, i.e a film of magneto-optical recording medium, an interference film formed on one side of said film, and a protective film formed on the other side of said film, characterised by the fact that said interference film has a thickness of 2 to $12 \times 10^{-8}$ m (200 to 1200Å), is formed of a dielectric material of the composition of $AO_x$, $LiAO_y$, or $BiD_zO_u$ (wherein A stands for at least one member selected from the group consisting of Ta and Nb, D for at least one member selected from the group consisting of Ge, Si, Ti, Pb, Zn, Al, and B, and x, y, z, and u stand for numerical values respectively satisfying the formulas $1.5 \leq x < 2.5$, $1.5 \leq y < 3$, $11 \leq z \leq 13$, and $16 \leq u \leq 23$) and that the thickness of the protective layer is not less than $2 \times 10^{-8}$ m (200Å)).

2. A magneto-optical disk according to claim 1, wherein the first layer contiguous to the transparent substrate is a interference film, the second Layer is formed of a magneto-optical recording medium with a thickness exceeding $3 \times 10^{-8}$ m (300Å), and the third layer is a protective film.

3. A magneto-optical disk according to claim 2, wherein said protective film is made of a dielectric substance or a metallic substance.

4. A magneto-optical disk according to claim 1, wherein the first layer contiguous to the transparent substrate is a protective film, the second layer is formed of a magneto-optical medium in a thickness of not more than $3 \times 10^{-8}$ m (300 Å), and the third layer is an interference film.

5. The magneto-optical disk according to claim 4, wherein said protective film is made of a dielectric substance.

6. The magneto-optical disk according to claim 1, wherein said protective film is formed of a composition of $SiO_2$, $SiO$, or $CeO_2$.

7. The magneto-optical disk according to claim 1, wherein said protective film has a composition of $E_aF_{1-a}O_v$ (wherein E stands for Zr or Cr, F for Hf or Zn, and a and V stand for numerical values respectively satisfying the formulas $O \leq a \leq 1$ and $v > 0.5$).

8. The magneto-optical disk according to claim 1, wherein said protective film has a composition of $G_bZr_{1-b}O_w$ (wherein G stands for Y or Al and b and w stand for numerical values respectively satisfying the formulas $O < b < 1$ and $0.6 \leq w \leq 1.9$).

9. The magneto-optical disk according to claim 1, wherein said protective film has a composition of $JO_s$ - (wherein J stands for Gd, Tb, Dy, Ho Yb, or Y and s for a numerical value satisfying the formula $0.6 \leq s \leq 1.3$).

10. The magneto-optical disk according to claim 1, wherein said protective film has a composition of $L_cM_{1-c}N_t$ (wherein L stands for Zr, B or Cr, M for Hf, Al or Ti, and c and t stand for numerical values respectively satisfying the formulas $O \leq c \leq 1$ and $0.4 \leq t \leq 0.9$).

**11.** The magneto-optical disk according to claim 1, wherein said protective film has a composition of $A'O_{x'}$, $LiA'O_{y'}$, or $Bi_{2'}D'O_{u'}$ (wherein A stands for at least one member selected from the group consisting of Ta and Nb, D' for at least one member selected from the group consisting of Ge, Si, Ti, Pb, Zn, Al, and B, x', y' z', and u' stand or numerical values respectively satisfying the formulas $1.5 \leq x' < 2.5$, $1.5 \leq y' < 3$, $11 \leq z' \leq 13$, and $16 \leq u' \leq 23$).

**12.** The magneto-optical disk according to claim 3, wherein said protective film is a film of a metallic element selected from the group consisting of Al, Bi, and Pb.

**13.** The magneto-optical disk according to claim 4, wherein a metallic film is formed additionally as the fourth layer on said interference film.

**Revendications**

**1.** Disque magnéto-optique comportant trois films superposés sur un substrat transparent, à savoir un film de support d'enregistrement magnéto-optique, un film d'interférences formé d'un côté du film de support d'enregistrement, et un film protecteur formé de l'autre côté du film de support d'enregistrement, disque caractérisé en ce que le film d'interférences présente une épaisseur de 2 à 12 x $10^{-8}$ m (200 à 1 200 Å), en ce que ce film protecteur est constitué d'un matériau de la composition de $AO_x$, $LiAO_y$, ou $BiD_zO_u$ (dans Laquelle A représente au moins un élément choisi dans le groupe comprenant Ta et Nb, D représente au moins un élément choisi dans le groupe comprenant Ge, Si, Ti, Pb, Zn, Al et B, tandis que x, y, z et u représentent des valeurs numériques satisfaisant respectivement les formules $1,5 \leq x < 2,5$, $1,5 \leq y < 3$, $11 \leq z \leq 13$ et $16 \leq u \leq 23$), et en ce que l'épaisseur de la couche protectrice n'est pas inférieure à 2 x $10^{-8}$ m (200 Å).

**2.** Disque magnéto-optique selon la revendication 1, caractérisé en ce que la première couche contiguë au substrat transparent est un film d'interférences, en ce que la seconde couche est constituée d'un support d'enregistrement magnéto-optique d'épaisseur supérieure à 3 x $10^{-8}$ m (300 Å), et en ce que la troisième couche est un film protecteur.

**3.** Disque magnéto-optique selon la revendication 2, caractérisé en ce que le film protecteur est réalisé dans une substance diélectrique ou une substance métallique.

**4.** Disque magnéto-optique selon la revendication 1, caractérisé en ce que la première couche contiguë au substrat transparent est un film protecteur, en ce que la seconde couche est constituée d'un support d'enregistrement magnéto-optique d'épaisseur ne dépassant pas 3 x $10^{-8}$ m (300 Å), et en ce que la troisième couche est un film d'interférences.

**5.** Disque magnéto-optique selon la revendication 4, caractérisé en ce que le film protecteur est réalisé dans une substance diélectrique.

**6.** Disque magnéto-optique selon la revendication 1, caractérisé en ce que le film protecteur est constitué d'une composition de $SiO_2$, SiO ou $CeO_2$.

**7.** Disque magnéto-optique selon la revendication 1, caractérisé en ce que le film protecteur a une composition de $E_aF_{1-a}O_v$ (dans laquelle E représente Zr ou Cr, F représente Hf ou Zn, tandis que a et V représentent des valeurs numériques satisfaisant respectivement les formules $O \leq a \leq 1$ et $v > 0,5$).

**8.** Disque magnéto-optique selon la revendication 1, caractérisé en ce que le film protecteur a une composition de $G_bZr_{1-b}O_w$ (dans laquelle G représente Y ou Al, tandis que b et w représentent des valeurs numériques satisfaisant respectivement les formules $O < b < 1$ et $0,6 \leq w \leq 1,9$).

**9.** Disque magnéto-optique selon la revendication 1, caractérisé en ce que le film protecteur a une composition de $JO_s$ (dans laquelle J représente Gd, Tb, Dy, Ho, Yb ou Y, tandis que s représente une valeur numérique satisfaisant la formule $0,6 \leq s \leq 1,3$).

**10.** Disque magnéto-optique selon la revendication 1, caractérisé en ce que le film protecteur a une composition de $L_cM_{1-c}N_t$ (dans laquelle L représente Zr, B ou Cr, M représente Hf, Al ou Ti, tandis que c et t représentent des valeurs numériques satisfaisant respectivement les formules $O \leq c \leq 1$ et $0,4 \leq t \leq 0,9$).

**11.** Disque magnéto-optique selon la revendication 1, caractérisé en ce que le film protecteur a une composition de $A'O_{x'}$ $LiA'O_{y'}$, ou $Bi_{z'}D'O_{u'}$ (dans laquelle A représente au moins un élément choisi dans le groupe comprenant Ta et Nb, D' représente au moins un élément choisi dans le groupe comprenant Ge, Si, Ti, Pb, Zn, Al et B, tandis que x', y', z' et u' représentent des valeurs numériques satisfaisant respectivement les formules $1,5 \leq x' < 2,5$ - $1,5 \leq y' < 3$ - $11 \leq z' \leq 13$ et $16 \leq u' \leq 23$).

**12.** Disque magnéto-optique selon la revendication 3, caractérisé en ce que le film protecteur est un film d'un élément métallique choisi dans le groupe comprenant Al, Bi et Pb.

**13.** Disque magnéto-optique selon la revendication 4, caractérisé en ce qu'on forme en outre un film métallique constituant la quatrième couche sur le film d'interférences.

**Patentansprüche**

**1.** Magneto-optische Disk, bei der auf einem transparenten Substrat drei Filme, d.h. ein Film eines magneto-optischen Aufzeichnungsmediums, ein Interferenzfilm auf der einen Seite des genannten Films und ein Schutzfilm auf der anderen Seite des genannten Films, übereinandergelagert sind, dadurch gekennzeichnet, daß der Interferenzfilm eine Dicke von 2 bis $12 \times 10^{-8}$ m (200 bis 1200Å) aufweist, aus einem dielektrischen Material der Zusammensetzung $AO_x$, $LiAO_y$ oder $BiD_2O_u$ gebildet ist (wobei A zumindest ein Element ausgewählt aus der Gruppe bestehend aus Ta und Nb bedeutet, D zumindest ein Element ausgewählt aus der Gruppe bestehend aus Ge, Si, Ti, Pb, Zn, Al und B bedeutet, und x, y, z und u numerische Werte bedeuten, die die Formeln $1,5 \leq x < 2,5$; $1,5 \leq y < 3$; $11 \leq z \leq 13$ bzw. $16 \leq u \leq 23$ erfüllen), und daß die Dicke der Schutzschicht nicht weniger als $2 \times 10^{-8}$ m (200Å) beträgt).

**2.** Magneto-optische Disk nach Anspruch 1, dadurch gekennzeichnet, daß die erste an das transparente Substrat angrenzende Schicht ein Interferenzfilm ist, die zweite Schicht aus einem magneto-optischen Aufzeichnungsmedium mit einer Dicke von mehr als $3 \times 10^{-8}$ m (300Å) gebildet ist und die dritte Schicht ein Schutzfilm ist.

**3.** Magneto-optische Disk nach Anspruch 2, dadurch gekennzeichnet, daß der Schutzfilm aus einer dielektrischen Substanz oder einer metallischen Substanz hergestellt ist.

**4.** Magneto-optische Disk nach Anspruch 1, dadurch gekennzeichnet, daß die erste an das transparente Substrat angrenzende Schicht ein Schutzfilm ist, die zweite Schicht aus einem magneto-optischen Medium mit einer Dicke von nicht mehr als $3 \times 10^{-8}$ m (300Å) gebildet ist und die dritte Schicht ein Interferenzfilm ist.

**5.** Magneto-optische Disk nach Anspruch 4, dadurch gekennzeichnet, daß der Schutzfilm aus einer dielektrischen Substanz hergestellt ist.

**6.** Magneto-optische Disk nach Anspruch 1, dadurch gekennzeichnet, daß der Schutzfilm aus einer Zusammensetzung von $SiO_2$, SiO oder $CeO_2$ gebildet ist.

**7.** Magneto-optische Disk nach Anspruch 1, dadurch gekennzeichnet, daß der Schutzfilm eine Zusammensetzung aus $E_aF_{1-a}O_v$ (wobei E für Zr oder Cr, F für Hf oder Zn steht und a und V numerische Werte bedeuten, die die Formeln $O \leq a \leq 1$ bzw. $v > 0,5$ erfüllen) aufweist.

**8.** Magneto-optische Disk nach Anspruch 1, dadurch gekennzeichnet, daß dar Schutzfilm eine Zusammensetzung aus $G_bZr_{1-b}O_w$ (wobei G für Y oder Al steht und b und w numerische Werte bedeuten, die die Formeln $O < b < 1$ bzw. $0,6 \leq w \leq 1,9$ erfüllen) aufweist.

9. Magneto-optische Disk nach Anspruch 1, dadurch gekennzeichnet, daß der Schutzfilm eine Zusammensetzung aus $JO_s$ (wobei J für Gd, Tb, Dy, Ho Yb oder Y steht und s einen numerischen Wert bedeutet, der die Formel $0{,}6 \leq s \leq 1{,}3$ erfüllt) aufweist.

10. Magneto-optische Disk nach Anspruch 1, dadurch gekennzeichnet, daß der Schutzfilm eine Zusammensetzung aus $L_cM_{1-c}N_t$ (wobei L für Zr, B oder Cr steht und M für Hf, Al oder Ti steht, und c und t numerische Werte bedeuten, die die Formeln $O \leq c \leq 1$ bzw. $0{,}4 \leq t \leq 0{,}9$ erfüllen) aufweist.

11. Magneto-optische Disk nach Anspruch 1, dadurch gekennzeichnet, daß der Schutzfilm eine Zusammensetzung aus $A'O_{x'}$, $LiA'O_{y'}$ oder $Bi_{z'}D'O_{u'}$ (wobei A' zumindest ein Element ausgewählt aus der Gruppe bestehend aus Ta und Nb bedeutet, D' zumindest ein Element ausgewählt aus der Gruppe bestehend aus Ge, Si, Ti, Pb, Zn, Al und B bedeutet, x', y', z' und u' numerische Werte bedeuten, die die Formeln $1{,}5 \leq x' < 2{,}5$; $1{,}5 \leq y' < 3$; $11 \leq z' \leq 13$ bzw. $16 \leq u' \leq 23$ erfüllen) aufweist.

12. Magneto-optische Disk nach Anspruch 3, dadurch gekennzeichnet, daß die Schutzschicht ein Film aus einem metallischen Element ausgewählt aus der Gruppe bestehend aus Al, Bi und Pb ist.

13. Magneto-optische Disk nach Anspruch 4, dadurch gekennzeichnet, daß zusätzlich ein metallischer Film als vierte Schicht auf dem Interferenzfilm gebildet ist.